# EUROPÄISCHE PATENTSCHRIFT

(11) **EP 0 776 348 B1**
(45) Veröffentlichungstag und Bekanntmachung des Hinweises auf die Patenterteilung: **10.11.1999**
(21) Anmeldenummer: 95929063.6
(22) Anmeldetag: 02.08.1995
(51) Int. Cl.: C08L 67/06, C08L 81/06, C08L 77/12, C08J 9/02

(54) **MISCHUNGEN AUS FLÜSSIGKRISTALLINEN POLYMEREN UND POLYARYLENSULFOXIDEN, SCHÄUME AUS DIESEN MISCHUNGEN SOWIE VERFAHREN ZU DEREN HERSTELLUNG UND IHRE VERWENDUNG**
MIXTURES OF LIQUID CRYSTAL POLYMERS AND POLYARYLENE SULPHOXIDES, FOAMS MADE OF SUCH MIXTURES, PROCESS FOR PRODUCING THE SAME AND THEIR USE
MELANGES DE POLYMERES A CRISTAUX LIQUIDES ET DE SULPHOXIDES DE POLYARYLENE, MOUSSES CONSTITUEES DE CES MELANGES, LEUR PROCEDE DE PRODUCTION ET LEUR UTILISATION

(30) Priorität: 15.08.1994 DE 4428726; 28.09.1994 DE 4434639
(43) Veröffentlichungstag der Anmeldung: 04.06.1997
(73) Patentinhaber: Ticona GmbH, 65451 Kelsterbach (DE)
(72) Erfinder: SCHECKENBACH, Helmut, D-63225 Langen (DE); RAUDIES, Dirk, D-56479 Elsoff (DE); SCHLEICHER, Andreas, D-65614 Beselich (DE); FRANK, Georg, D-72074 Tübingen (DE)
(86) Internationale Anmeldenummer: EP9503082
(87) Internationale Veröffentlichungsnummer: WO9605252

(56) Entgegenhaltungen:
- EP-A- 0 044 177
- EP-A- 0 409 482
- EP-A- 0 470 557
- WO-A-91/18041
- DE-A- 4 206 996
- US-A- 3 326 865
- US-A- 4 710 522
- DATABASE WPI Derwent Publications Ltd., London, GB; AN 88-365210(51) & JP,A,63 275 667 (KANEBO KK) 14. November 1988

## Beschreibung

Mischungen aus flüssigkristallinen Polymeren und Polyarylensulfoxiden, Schäume aus diesen Mischungen sowie Verfahren zu deren Herstellung und ihre Verwendung.

Die Erfindung betrifft Mischungen basierend auf flüssigkristallinen Polymeren (LCP) und Polyarylensulfoxiden, die als Blends verbesserte Eigenschaften bei der Verarbeitung zu Formmassen besitzen. Als verbesserte Eigenschaft ist beispielsweise eine verbesserte Bindenahtfestigkeit anzusehen.

Geschäumte Polymere sind wohlbekannt. Sie finden insbesondere dort Anwendung, wo geringes Gewicht oder ein hohes Festigkeit/Gewichts-Verhältnis gefordert ist.

Geschäumte LCP können Verwendung finden als hochbeanspruchbare Funktionsbauteile, beispielsweise im Flugzeug- und Automobilbau sowie im chemischen Apparatebau oder als chemikalien- oder wärmebeständige Isolationsmaterialien.

Im allgemeinen werden jedoch durch das Verschäumen die mechanischen Eigenschaften der Polymerformmassen in einem Maße verschlechtert, daß sie für viele Einsatzgebiete nicht mehr geeignet sind. Zusätzlich zu den inhärenten Eigenschaftsvorteilen geschäumter Polymere im allgemeinen werden geschäumte LCP dort benötigt, wo die speziellen LCP-Eigenschaften gefordert werden, wie hohe Zugfestigkeit, hohe Temperaturbeständigkeit, hohe chemische Beständigkeit, hohe Zähigkeit, insbesondere Kerbschlagzähigkeit. Diese Schäume sollten auch eine niedrige Anisotropie oder Orientierung aufweisen.

Die US-PS 4,429,060 beschreibt Hochleistungsschäume aus flüssigkristallinen vollaromatischen Polyestern, in denen mindestens 10 Mol-% 6-Hydroxy-2-naphthoesäure-Einheiten vorhanden sind. Diese Schäume haben ein gutes Verhältnis von Festigkeit zu Gewicht, eine hohe Temperaturbeständigkeit sowie eine ausgezeichnete Chemikalienbeständigkeit. Sie weisen eine niedrigere Anisotropie auf als ungeschäumtes LCP. Diese Schäume können nach konventionellen Methoden hergestellt werden, wie Extrusion oder Spritzguß. Zur Schaumbildung ist hierzu ein Treibmittel notwendig. Als geeignete Treibmittel werden 5-Phenyltetrazol und Trihydrazintriazin genannt.

Die US-PS 4,429,061 beschreibt wärmebehandelte LCP-Schäume, die ein hohes Maß an Steifheit und Festigkeit besitzen. Der Kern der LCP-Schäume hat hochorientierte Zellwände, die durch eine Wärmebehandlung in ihren Eigenschaften verbessert werden. Diese geschäumten LCP's haben einen niedrigeren Grad an Anisotropie im Vergleich zu ungeschäumtem LCP.

Nach der US-PS 5,210,107 sind jedoch die mechanischen Eigenschaften, die mit den obengenannten Schäumen erreicht werden können, aufgrund der zu großen Zellstruktur zu niedrig, um kommerziell verwertet werden zu können.

LCP-Schäume nach dem Stand der Technik können zum einen durch chemische Treibmittel oder durch die Zugabe von Gasen in die Schmelze hergestellt werden. Nachteil der Treibmittel ist häufig ihre gesundheitliche Bedenklichkeit sowie ihr niedriger Schmelzpunkt, der häufig unter dem Schmelzpunkt der LCPs liegt. Zudem ist eine homogene Durchmischung sowohl mit Treibmitteln als auch mit Gasen nur sehr schwierig zu realisieren, was zu verminderten mechanischen Eigenschaftswerten führt.

Aufgabe der vorliegenden Erfindung war die Entwicklung von Formmassen, die auf reaktiven Polymerblends beruhen und die gegenüber den Ausgangs-LCPs als solchen eine verbesserte Bindenahtfestigkeiten aufweisen. Darüber hinaus sollte ein Verfahren zur Herstellung von Schäumen entwickelt werden, die aus LCPs bestehen und die nicht durch den Zusatz üblicher Treibmittel oder die Zugabe von Gasen in die Schmelze der zu verschäumenden LCPs hergestellt werden, trotzdem aber eine starke Aufschäumung ermöglichen.

Gelöst wird diese Aufgabe durch eine Polymermischung der eingangs genannten Gattung, deren Kennzeichenmerkmal darin zu sehen ist, daß sie
(A) 1 bis 99 Gew.-%, vorzugsweise 5 bis 97,5 Gew.-% und insbesondere 10 bis 95 Gew.-% mindestens eines thermotrop-flüssigkristallinen Polyesters und/oder Polyesteramids und
(B) 1 bis 99 Gew.-%, vorzugsweise 2,5 bis 95 Gew.-% und insbesondere 5 bis 90 Gew.-% mindestens eines Sulfoxidgruppen-enthaltenden Polymers enthält,
wobei die Prozentangaben jeweils auf das Gesamtgewicht der Σ [(A) + <B)] bezogen sind.

Überraschend wurde gefunden, daß eine Mischung von thermotropflüssigkristallinen Polymeren mit Polymeren, die in der Polymerkette Sulfoxidgruppen enthalten, leicht einen Schaumstoff bilden. Unter der Einwirkung von Hitze zersetzt sich das thermisch instabile Sulfoxid, wobei die Sulfoxidgruppen zum Sulfid reduziert werden. Dabei werden Gase freigesetzt, die als Blähmittel wirken. Zudem wurde gefunden, daß sich aus den beiden Mischungskomponenten eine homogene Formmasse bilden läßt, die vorteilhaft auch als solche eingesetzt werden kann. Die Mischung besitzt im Vergleich zu den LCPs als solchen eine verminderte Anisotropie und verbesserte Bindenahtfestigkeiten.

Unter flüssigkristallinen Polymeren werden alle thermotropen flüssigkristallinen Polymere mit einem mittleren Molekulargewicht, ausgedrückt als M_{w}, (M_{w} = Gewichtsmittel) von 10 000 bis 200 000 g/mol und einer Übergangstemperatur > 250°C, sowie alle amorphen thermotropen flüssigkristallinen Polymere mit einem mittleren Molekulargewicht (M_{w} von 10 000 bis 200 000 g/mol und einer Glasübergangstemperatur > 160°C verstanden.

Eine für die Mischungen gemäß der Erfindung geeignete Klasse flüssigkristalliner Polymere sind vollaromatische Polyester wie sie die US-PS 4,161,470 beschreibt. Es handelt sich dabei um Copolyester mit wiederkehrenden Struktureinheiten der Formeln I und II 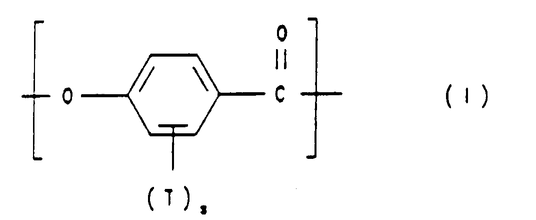 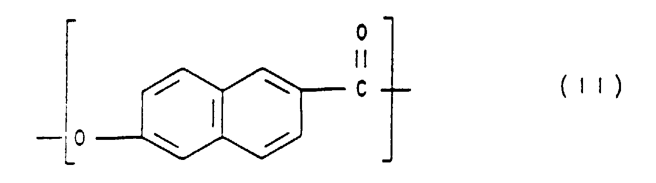 worin T ausgewählt ist aus einem Alkylrest, einem Alkoxyrest, jeweils mit 1 bis 4 Kohlenstoffatomen oder einem Halogen, vorzugsweise Chlor, Brom oder Fluor, s bedeutet Null oder eine ganze Zahl 1, 2, 3 oder 4, wobei im Falle mehrerer Reste T diese unabhängig voneinander gleich oder verschieden sind. Die Naphthoyl-Copolyester enthalten 10 bis 90, vorzugsweise 25 bis 45 Mol-% Struktureinheiten der Formel I und 90 bis 10, vorzugsweise 85 bis 55 Mol-% der Formel II.

Weitere für die Mischungen gemäß der Erfindung eingesetzte flüssigkristalline Polyester vom Typ Oxybenzoylcopolyester sind in der EP-A-0 278 066 und der US-A-3,637,595 beschrieben. Die dort angeführten Oxybenzoylcopolyester enthalten Struktureinheiten der Formeln III, IV, V und VI, wobei jeweils ein oder mehrere genannte Struktureinheiten vorliegen können. 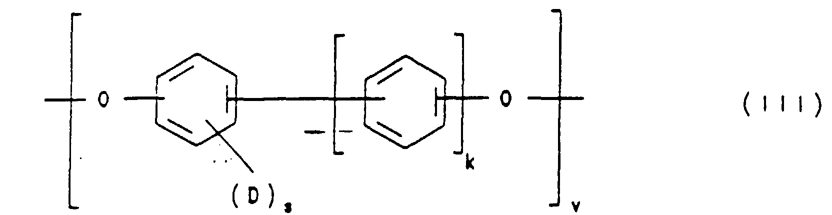 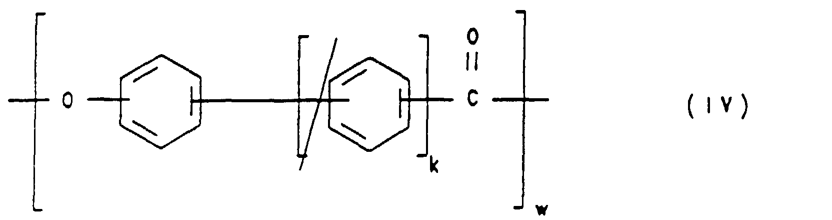 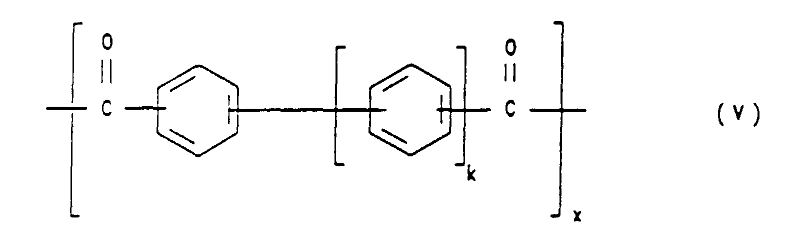 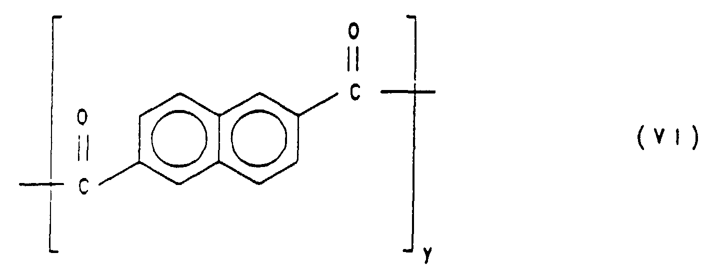 In den Formeln III, IV, V und VI ist k Null oder 1, v, w, x und y sind ganze Zahlen, die gleich oder größer als 1 sind, D ist ausgewählt aus einem Alkylrest mit 1 bis 4 Kohlenstoffatomen, einem Arylrest, einem Arylalkylrest mit jeweils 6 bis 10 Kohlenstoffatomen oder einem Halogen wie Fluor, Chlor oder Brom, s hat die obengenannte Bedeutung, wobei bei mehreren Resten D diese unabhängig voneinander gleich oder verschieden sind. Die Summe der Indexzahlen v, w, x und y weist Werte von 30 bis 600 auf. Die Oxybenzoyxlcopolyeser enthalten in allgemeinen 0,6 bis 60, vorzugsweise 8 bis 48 Mol-% Struktureinheiten der Formel III, 0,4 bis 98,5, vorzugsweise 5 bis 85 Mol-% Struktureinheiten der Formel IV und 1 bis 60, vorzugsweise 8 bis 48 Mol-% Struktureinheiten der Formel V und/oder VI, wobei sich die Anteile er Struktureinheiten der Formeln III, IV, V und VI auf 100 Mol-% ergänzen.

Für die Mischungen sind ebenfalls Copolyester geeignet, die nur Struktureinheiten der Formeln III und V, sowie III und VI enthalten. Diese flüssigkristallinen Polymere enthalten im allgemeinen 40 bis 60 Mol-% der Struktureinheiten der Formel III und 60 bis 40 Mol-% Struktureinheiten der Formel V und/oder VI. Bevorzugt ist hierbei ein Molverhältnis von 1 zu 1. Solche Polyester werden zum Beispiel in den US-PSen 4,600,765, 4,614,790 und 4,614,791 beschrieben.

Ebenfalls geeignet sind solche Copolyester,die neben den Struktureinheiten ausgewählt aus den Formeln III bis VI, auch solche der Formeln I und/oder II enthalten; z.B. mit einem Anteil an Struktureinheiten der Formel I von 15 bis 1 Mol-%, der Formel II von 50 bis 79 Mol-%, der Formel III von 20 bis 10 Mol-% und der Formel V bzw. VI von 20 bis 10 Mol-%.

Unter Sulfoxidgruppen enthaltenden Polymeren (B) werden erfindungsgemäß Polymere verstanden, die wenigstens eine Arylensulfoxideinheit

-Ar-SO- ; Ar = Arylen (VII)

enthalten. Arylene sind beispielsweise Phenylen, Biphenylen (-C₆H₄-C₆H₄-), Naphthalen, Anthracen oder Penanthren, die jeweils ein- oder mehrfach substituiert sein können. Substituenten sind z.B. geradkettige, cyclische oder verzweigte C₁-C₂₀-Kohlenwasserstoffreste, wie C₁-C₁₀-Alkylreste, z.B. Methyl, Ethyl, n-Propyl, iso-Propyl, n-Butyl, t-Butyl, n-Hexyl oder C₆-C₁₄-Arylreste, z.B. Phenyl oder Naphthyl, Halogene, Sulfonsäure-, Amino-, Nitro-, Cyano-, Hydroxy-, Alkyloxy-, Alkyloxy oder Carboxylgruppen.

Ein bevorzugtes Sulfoxidgruppen enthaltendes Polymer ist Polyphenylensulfoxid, das z.B. leicht durch die Oxidation von Polyphenylensulfid mit Ozon hergestellt werden kann.

Der erfindungsgemäß erzielbare Schäumungseffekt hängt von der Art des Sulfoxidgruppen enthaltenden Polymers, insbesondere von der Menge der Sulfoxidgruppen ab und von dem Anteil des Sulfoxidgruppen enthaltenden Polymers in der Polymer-Mischung. Außerdem hängt der Schäumungseffekt von der Schmelzviskosität des zu verschäumenden LCPs ab.

Das Erhitzen der Ausgangspolymere kann erfindungsgemäß in einem Temperaturbereich von 280 bis 340°C erfolgen. Vorzugsweise liegt die Temperatur im Bereich von 300 bis 320°C.

Gemäß der Erfindung können auch Mischungen verschiedener Sulfoxidgruppenenthaltender Polymere eingesetzt werden. Auch ist der Zusatz eines weiteren Polymeren, wie Polyarylensulfid, zu der zu verschäumenden Mischung möglich.

Die LCPs können beispielsweise als Pulver, Preßlinge, Fasern oder Folien eingesetzt werden. Die Pulver besitzen dabei handelsübliche Teilchengrößen, wobei auch Granulate verwendbar sind. Werden die Polymere als Fasern verwendet, werden diese als Stapelfasern, Mikrofasern, Nadelfilz, "non woven" Material, Kardenband oder Gewebe eingesetzt. Auch Folien oder Folienschnipsel können in geeigneter Form Verwendung finden.

Die Sulfoxidgruppen enthaltenden Polymere sollten, um einen gleichmäßigen Schaum zu erzielen, in Pulverform verwendet werden. Die mittlere Teilchengröße (D₅₀-Wert) liegt im Bereich von 0,3 • 10⁻⁶ bis 500 • 10⁻⁶ m, vorzugsweise 0,5 • 10⁻⁶ bis 300 • 10⁻⁶ und insbesondere 0,5 • 10⁻⁶ bis 200 • 10⁻⁶ m.

Die Polymermischung auf Basis von flüssigkristallinen Polymeren und Polyarylensulfoxiden kann im allgemeinen als unverschnittenes Material eingesetzt werden. Möglich ist aber auch der Zusatz von weiteren Füllstoffen, wie Kreide, Talkum, Ton, Glimmer, und/oder faserförmigem Verstärkungsmittel, wie Glas- und Kohlenstoffasern, Whisker, sowie weitere Zusatzstoffe und Verarbeitungshilfsmittel, z. B. Gleitmittel, Trennmittel, Antioxidantien, UV-Stabilisatoren enthalten.

Die erfindungsgemäßen Schäume und unverschäumten Mischungen selbst können zur Herstellung von Formteilen verwendet werden. Die Formteile können als hochbeanspruchbare Funktionsbauteile, beispielsweise im Flugzeug- und Automobilbau, verwendet werden. Weitere Verwendungen der Formteile bieten sich im chemischen Apparatebau an. Die Schäume oder Formteile können als chemikalien- oder wärmebeständige Isolationsmaterialien dienen.

Vorteile des erfindungsgemäßen Verfahrens zur Herstellung schaumförmiger Polymerstrukturen sind darin zu sehen, daß
- kein Zusatz von niedermolekularen Treibmitteln notwendig ist,
- das Verfahren einfach durchführbar ist,
- keine Verwendung umweltschädlicher Treibgase notwendig ist,
- LCP-Schäume mit besonders geringer Dichte möglich sind,
- und daß ein breiter Bereich des Schäumungsgrades und der Porengröße einstellbar ist.

Die Erfindung soll nachfolgend durch die Ausführungsbeispiele für den Fachmann noch näher erläutert werden, ohne aber auf die konkret dargestellten Ausführungsformen beschränkt zu sein.

### Beispiel 1

Es wurde eine Mischung hergestellt aus 90 Gew.-% des flüssigkristallinen Polyesters ®Vectra A 950 der Hoechst AG und 10 Gew.-% Polyphenylensulfon (PPSO). ®Vectra A 950 lag in Granulatform, das PPSO als Pulver mit einer Teilchengröße, ausgedrückt als d₅₀-Wert, von 60 µm vor.

Als PPSO wurde das in der DE-A 43 14 737.6 nach Beispiel 1 hergestellte Produkt verwendet.

Die bei einer Temperatur von 180°C, im Vakuum, unter Stickstoff und über eine Zeitdauer von 12 Stunden getrocknete Mischung wurde auf einem Zweischneckenextruder LSM 34 der Fa. Leistritz, Nürnberg, zu Granulat verarbeitet:

### Beispiel 1A:

| Verarbeitungsparameter: | |
|---|---|
| Zylindertemperatur | 285°C |
| Drehzahl | 40 U/min |

Strang und Granulat zeigten das normale Aussehen des LCP ®Vectra, schaumartige Struktur war nicht festzustellen.

### Beispiel 1B:

| Verarbeitungsparameter: | |
|---|---|
| Zylindertemperatur | 330°C |
| Drehzahl | 40 U/min |

Strang und Granulat zeigten eine schaumartige Struktur.

Aus den beiden Granulaten nach 1A) und nach 1B) wurden auf einer Spritzgußmaschine (Typ KM090/210B, Krauss-Maffei, München, BRD) Prüfkörper bei folgenden Verfahrensparametern hergestellt:

| | | |
|---|---|---|
| Zylindertemperaturen | Heizzone (HZ) 1: | 280°C, |
| | HZ 2 bis 5: | 285°C, |
| Düsentemperatur | 285°C, | |
| Werkzeugtemperatur | 120°C. | |

An den Prüfkörpern wurden unmittelbar nach der Herstellung Eigenschaftswerte gemessen. Die Probekörper aus beiden Granulaten 1A) und 1B) wiesen keine schaumartige Struktur auf.
- Die Dichte wurde nach DIN 53479 bestimmt.
- Die Zugeigenschaften (Elastizitätsmodul, Zugfestigkeit und Dehnung) wurden gemäß ISO 527 bestimmt. Die Proben wurden dabei mit einer Kreuzkopfgeschwindigkeit von 5 mm/min geprüft. Als Probekörper kam der Zugstab Nr. 3 zum Einsatz.
- Die Zugeigenschaften (Elastizitätsmodul, Zugfestigkeit und Dehnung), die parallel und senkrecht zur Fließrichtung der Polymeren der Spritzgußform bestimmt wurden, wurden an Probekörpern mit den Maßen 80 x 10 x 4 mm bestimmt, die senkrecht und parallel zur Fließrichtung aus Platten (Filmanschnitt) mit den Maßen 80 x 80 x 4 mm ausgesägt wurden. die Proben wurden hierbei mit einer Kreuzkopfgeschwindigkeit von 5 mm/min geprüft.
- Der Zugversuch wurde an Probekörpern mit Bindenaht unter den gleichen Bedingungen durchgeführt. Als Probekörper kam hier ein doppelseitig angespritzter Zugstab mit stumpfer Bindenaht in der Mitte der Probekörpers zum Einsatz. Die Bindenahtfestigkeit errechnet sich aus dem Quotienten der maximalen Zugfestigkeit mit und ohne Bindenaht. Ein geeignetes Maß für die Beurteilung des Bindenahtverhaltens kann auch die Reißdehnung des zweiseitig angespritzten Zugstabes sein.
- Die Formbeständigkeitstemperaturen HDT A und C wurden nach DIN 53 461 bestimmt. Die Probekörper hatten die Maße 120 x 10 x 4 mm.

Zum Vergleich wurde ®Vectra A 950 wie Beispiel 1A extrudiert, verspritzt und ausgeprüft (Beispiel C). Die Ergebnisse aller Beispiele sind in der nachfolgenden Tabelle 1 aufgeführt.

**Tabelle 1:**

| Beispiele: | 1A | 1B | C |
|---|---|---|---|
| Dichte [g/cm³] | 1,404 | 1,404 | 1,398 |
| Zug-E-Modul [N/mm²] | 7770 | 7670 | 9340 |
| Zugfestigkeit [N/mm²] | 126 | 121 | 150 |
| Reißdehnung [%] | 3,7 | 3,5 | 2,9 |
| Zugspannung - Bindenaht [N/mm²] | 21 | 21 | 13 |
| Reißdehnung - Bindenaht [%] | 0,5 | 0,4 | 0,2 |
| Bindenahtfestigkeit [%] | 17 | 17 | 8 |
| Formbeständigkeitstemperatur HDT A [°C] | 160 | 167 | 165 |
| Formbeständigkeitstemperatur HDT C [°C] | 95 | 99 | 98 |
| E-Modul [N/mm²]senkrecht zur Fließrichtung | 1.612 | 1.510 | 1.510 |
| Reißspannung [N/mm²] senkreicht zur Fließrichtung | 45,1 | 42,8 | 48,4 |
| Reißdehnung [%] senkreicht zur Fließrichtung | 4 | 3,3 | 5,7 |
| E-Modul [N/mm²] parallel zur Fließrichtung | 2.410 | 2.150 | 2.320 |
| Reißspannung [N/mm²] parallel zur Fließrichtung | 74,2 | 74,6 | 82,6 |
| Reißdehnung [%] parallel zur Fließrichtung | 2,5 | 3,5 | 3,8 |

### Thermoanalytische Messungen:

Von den Mischungen hergestellt nach den Beispielen 1A) und 1B) wurden DSC-Analysen durchgeführt:

| | |
|---|---|
| DSC-Meßgerät | DSC-7, Hersteller: Perkin Elmer, Überlingen, Bundesrepublik Deutschland |
| | |
| Meßbedingungen | Meßatmosphäre: Stickstoff |
| | Aufheizrate/Abkühlrate: 20°C/min |
| | Temperaturprogramm |
| | 1. Heizen von - 10°C bis 380°C Abkühlen von 380°C auf - 10°C |
| | 2. Heizen von - 10°C bis 380°C |

Die Mischung nach Beispiel 1A) zeigte beim 1. Heizen eine Exothermie bei 370°C (Peak), die Mischung nach Beispiel 1B) bei 359°C (Peak). Beim 2. Heizen war keine Exothermie mehr festzustellen.

Die Exothermie ist die Vernetzungsreaktion von LCP mit PPSO. Bei vorheriger Aktivierung, wie bei der Mischung nach Beispiel 1B), geht die Exothermie bei niedrigeren Temperaturen weiter.

### Beispiel 2:

Granulat, hergestellt nach Beispiel 1A, wurde auf einer Presse (Typ Polystat 200S, Fa. Schwabenthan, Berlin) bei unterschiedlichen Preßtemperaturen zu Platten von 60 mm Durchmesser verarbeitet. Der Preßdruck betrug 8 bar, die Preßdauer 25 min. Die Ergebnisse sind in Tabelle 2 dargestellt.

**Tabelle 2:**

| Preßtemperatur [°C] | Masse der Preßplatten [g] | Dichte [g/cm³] | Bemerkungen |
|---|---|---|---|
| 280 | 19,99 | 1,382 | keine Schaumbildung |
| 290 | 20,05 | 1,388 | keine Schaumbildung |
| 300 | 19,98 | 1,385 | keine Schaumbildung |
| 310 | 19,92 | 1,153 | Integralschaum, geschlossenzellig |
| 315 | 18,19 | 0,662 | Integralschaum, geschlossenzellig |
| 320 | - | - | Polymer läuft aus der Form |

### Beispiel 3:

Granulat, hergestellt wie in Beispiel 1A und 1B, wurde in Reagenzgläsern in einem Blockthermostat (Typ: Unitherm der Fa. Liebisch, Bielefeld) bei unterschiedlichen Temperaturen verschieden lang aufgeheizt und dabei Beobachtungen zur Schaumbildung gemacht. Die Ergebnisse sind in der nachfolgenden Tabelle 3 dargestellt.

**Tabelle 3:**

| Temperatur [°C] | Zeit [min] | Granulat 1A | Granulat 1B |
|---|---|---|---|
| 280 | 30 | - | - |
| 280 | 60 | - | - |
| 290 | 10 | - | + |
| 290 | 30 | + | + |
| 300 | 10 | + | + |
| 300 | 30 | + | ++ |
| 310 | 10 | + | ++ |
| 310 | 30 | kollabiert | kollabiert |

| | | | |
|---|---|---|---|
| - : kein Aufschäumen des Granulats | | | |
| + : leichtes Aufschäumen des Granulats | | | |
| ++ : starkes Aufschäumen des Granulats | | | |

### Beispiel 4:

Es wurden Mischungen hergestellt aus :

| | |
|---|---|
| 1 % | PPSO |
| 99 % | LCP (Beispiel 4A) |
| | |
| 5 % | PPSO |
| 95 % | LCP (Beispiel 4B) |
| | |
| 10 % | PPSO |
| 90 % | LCP (Beispiel 4C) |
| | |
| 100 % | LCP (Vergleichsbeispiel 4D) |

Als flüssigkristalliner Polyester wurde ®Vectra A 950 der Hoechst AG verwendet. Als PPSO wurde das in der DE-A 43 14 737 nach Beispiel 1 hergestellte Produkt verwendet.
®Vectra A 950 lag in Granulatform, das PPSO als Pulver (d₅₀ = 60 µm) vor.

Die getrockneten Mischungen (getrocknet bei 130°C, Vakuum, N₂, ca. 12 h) wurden auf einem Kneter (Typ: Rheomix 600 der Fa. Haake Buchler, Karlsruhe) 20 min bei 280°C geknetet. Direkt danach wurde bei 280°C eine Platte gepreßt (Presse-Typ: Polystat 200S der Fa. Schwabenthan, Berlin) und hiervon die Viskosität als Funktion der Scherrate (Frequenzsweep) auf einem Rheometer (Typ: Dynamic Spectrometer Model RDS-II, der Fa. Rheometrics, Frankfurt) bei 280°C bestimmt.

Eine Schaumbildung trat während der Probenherstellung und -messung nicht auf.

Ergebnis der Viskositätsmessungen:
Mit zunehmendem PPSO-Gehalt nahm die Viskosität über den gesamten Frequenzbereich ab. Zusätzlich wurde die Mischung nach Beispiel 4C bei 290°C, 305°C und 315°C verpreßt und die Viskosität bei 290°C bestimmt. Schaumbildung war während des Pressens bei 315°C und in sehr geringem Maße bei 305°C festzustellen. Bei 290°C war keine Schaumbildung festzustellen. Je höher die Preßtemperatur gewählt wurde, d. h. je vollständiger die Vernetzungsreaktion ablaufen konnte, desto höher war die Viskosität über den gesamten Frequenzbereich bei 290°C.

## Patentansprüche

1. Blend enthaltend:
(A) 1 bis 99 Gew.-% mindestens eines thermotrop flüssigkristallinen Polyesters und/oder Polyesteramids und
(B) 1 bis 99 Gew.-% mindestens eines Polymers, das wenigstens eine Arylensulfoxideinheit -Ar-SO- (Ar = Arylen) enthält
jeweils bezogen auf das Gesamtgewicht der Σ [(A) + (B)].

2. Blend nach Anspruch 1, dadurch gekennzeichnet, daß als Komponente (B) lineare und/oder verzweigte Polymere mit einem mittleren Molekulargewicht M_{w} im Bereich von 4.000 bis 200.000 eingesetzt werden, die aus wiederkehrenden Einheiten der Formel [-(F-S)_{c}-(F-SO)_{d}-] zusammengesetzt sind, wobei F unabhängig voneinander für einfache oder über para-, meta- oder orthoverknüpfte Arylensysteme mit 6 bis 18 C-Atomen steht, und vorzugsweise Phenylen, Napthylen oder Biphenylen darstellt, wobei die Summe aus c+d gleich 1 ist, mit der Maßgabe, daß d stets ≥ 0,70 ist.

3. Blend nach Anspruch 1, dadurch gekennzeichnet, daß als Komponente (A) thermotrop-flüssigkristalline Polymere mit einem mittleren Molekulargewicht M_{w} im Bereich von 10.000 bis 200.000 g/mol und einer Übergangstemperatur > 250°C, sowie amorphe thermotrop-flüssigkristalline Polymere mit einem mittleren Molekulargewicht M_{w} von 10.000 bis 200.000 g/mol und einer Glasübergangstemperatur > 160°C eingesetzt werden.

4. Blend nach einem der Ansprüche 1 bis 3, dadurch gekennzeichnet, daß er zusätzlich thermische Stabilisatoren, UV-Stabilisatoren, Antistatika, Flammschutzmittel, Farbstoffe, Pigmente, anorganische und/oder organische Füllstoffe enthält.

5. Blend nach einem der Ansprüche 1 bis 4, dadurch gekennzeichnet, daß die mittlere Teilchengröße (D₅₀-Wert) der Komponente (B) im Bereich von 0,3 · 10⁻⁶ bis 500 · 10⁻⁶ m, vorzugsweise 0,5 · 10⁻⁶ bis 300 · 10⁻⁶ m, insbesondere 0,5 · 10⁻⁶ bis 200 · 10⁻⁶ m, liegt.

6. Geschäumtes Polymermaterial enthaltend einen Blend nach einem der Ansprüche 1 bis 5, dadurch gekennzeichnet, daß es eine Dichte besitzt, die um mindestens 50 % gegenüber der Dichte des ungeschäumten Polymermaterials verringert ist.

7. Geschäumtes Polymermaterial nach Anspruch 6, dadurch gekennzeichnet, daß der Schaum ein Integralschaum ist.

8. Verfahren zur Herstellung von geschäumtem Polymermaterial nach Anspruch 6 oder 7, dadurch gekennzeichnet, daß ein Blend nach Anspruch 1 einer Hitzebehandlung bei einer Temperatur im Bereich von 280 bis 340°C unterzogen wird.

9. Verfahren nach Anspruch 8, dadurch gekennzeichnet, daß die Hitzebehandlung bei einer Temperatur im Bereich von 300 bis 320°C durchgeführt wird.

10. Verfahren nach Anspruch 8 oder 9, dadurch gekennzeichnet, daß die Hitzebehandlung über eine Zeit von 5 bis 30 min durchgeführt wird.

11. Verwendung eines geschäumten Polymermaterials nach Anspruch 6 oder 7 zur Herstellung von Formteilen.

12. Verwendung eines nicht geschäumten Blends nach einem der Ansprüche 1 bis 5 zur Herstellung von Formteilen, die eine erhöhte Bindenahtfestigkeit und eine reduzierte Viskosität, verglichen jeweils mit der Bindenahtfesigkeit bzw. der Viskosität der Ausgangs-LCPs, aufweisen.

## Claims

1. A blend comprising:
(A) from 1 to 99% by weight of at least one thermotropic-liquid-crystalline polyester and/or polyesteramide and
(B) from 1 to 99% by weight of at least one polymer which contains at least one arylene sulfoxide unit -Ar-SO- (Ar = arylene),
in each case based on the total weight Σ[(A) + (B)].

2. A blend as claimed in claim 1, wherein component (B) is a linear and/or branched polymer having a mean molecular weight M_{W} in the range from 4,000 to 200,000 comprising recurring units of the formula [-(F-S)_{c}-(F-SO)_{d}-], where F, independently of one another, are simple or para-, meta- or ortho-linked arylene systems having 6 to 18 carbon atoms, preferably phenylene, naphthylene or biphenylene, where the sum c + d is 1, with the proviso that d is always ≥ 0.70.

3. A blend as claimed in claim 1, wherein component (A) is a thermotropic liquid-crystalline polymer having a mean molecular weight M_{W} in the range from 10,000 to 200,000 g/mol and a transition temperature of > 250°C, and an amorphous thermotropic liquid-crystalline polymer having a mean molecular weight M_{W} of from 10,000 to 200,000 g/mol and a glass transition temperature of > 160°C.

4. A blend as claimed in any of claims 1 to 3, which additionally comprises thermal stabilizers, UV stabilizers, antistatics, flameproofing agents, dyes, pigments and/or inorganic and/or organic fillers.

5. A blend as claimed in any of claims 1 to 4, wherein the mean particle size (D₅₀ value) of component (B) is in the range from 0.3 · 10⁻⁶ to 500 · 10⁻⁶ m, preferably from 0.5 · 10⁻⁶ to 300 · 10⁻⁶ m, in particular from 0.5 · 10⁻⁶ to 200 · 10⁻⁶ m.

6. A foamed polymer material comprising a blend as claimed in any of claims 1 to 5, which has a density at least 50% lower than the density of the unfoamed polymer material.

7. A foamed polymer material as claimed in claim 6, wherein the foam is a structural foam.

8. A process for the production of foamed polymer material as claimed in claim 6 or 7, which comprises subjecting a blend as claimed in claim 1 to heat treatment at a temperature in the range from 280 to 340°C.

9. The process as claimed in claim 8, wherein the heat treatment is carried out at a temperature in the range from 300 to 320°C.

10. The process as claimed in claim 8 or 9, wherein the heat treatment is carried out for a time of from 5 to 30 minutes.

11. The use of a foamed polymer material as claimed in claim 6 or 7 for the production of moldings.

12. The use of an unfoamed blend as claimed in any of claims 1 to 5 for the production of moldings having increased weld strength and reduced viscosity, in each case compared with the weld strength or viscosity of the starting LCPs.

## Revendications

1. Mélange contenant:
(A) 1 à 99% en poids d'au moins un polyester et/ou polyesteramide à cristaux liquides thermotropes et
(B) 1 à 99% en poids d'au moins un polymère, qui contient au moins une unité sulfoxyde d'arylène -Ar-SO-(Ar = Arylène)
basé dans chaque cas sur le poids total de Σ [(A)+(B)].

2. Mélange suivant la revendication 1, caractérisé en ce qu'on utilise comme composant (B) des polymères linéaires et/ou ramifiés ayant un poids moléculaire moyen M_{w} dans l'intervalle de 4 000 à 200 000, qui sont composés d'unités récurrentes de formule [-(F-S)_{c}-(F-SO)_{d}-), dans laquelle F indépendamment l'un de l'autre, correspond à des systèmes arylène simples ou à liaison para, méta ou ortho, comprenant 6 à 18 atomes de carbone, et représente de préférence un phénylène, un naphtylène ou un biphénylène, la somme de c + d étant égale à 1, dans la mesure où d est toujours ≥ 0,70.

3. Mélange suivant la revendication 1, caractérisé en ce qu'on utilise comme composant (A) des polymères à cristaux liquides thermotropes ayant un poids moléculaire moyen M_{w} dans l'intervalle de 10 000 à 200 000 g/mole et une température de transition > 250°C, ainsi que des polymères à cristaux liquides thermotropes amorphes ayant un poids moléculaire moyen M_{w} de 10 000 à 200 000 g/mole et une température de transition vitreuse > 160°C.

4. Mélange suivant l'une des revendications 1 à 3, caractérisé en ce qu'il contient en outre des stabilisants thermiques, des stabilisants-UV, des antistatiques, des agents ignifuges, des colorants, des pigments, des charges inorganiques et/ou organiques.

5. Mélange suivant l'une des revendications 1 à 4, caractérisé en ce que la taille particulaire moyenne (valeur D₅₀) du composant (B) se situe dans l'intervalle de 0,3.10⁻⁶ à 500.10⁻⁶ m, de préférence 0,5.10⁻⁶ à 300.10⁻⁶ m, en particulier 0,5.10⁻⁶ m à 200.10⁻⁶ m.

6. Matériau polymère expansé contenant un mélange suivant l'une des revendications 1 à 5, caractérisé en ce qu'il possède une densité qui est réduite d'au moins 50% par rapport à la densité du matériau polymère non expansé.

7. Matériau polymère expansé suivant la revendication 6, caractérisé en ce que la mousse est une mousse intégrée.

8. Procédé de préparation de matériau polymère expansé suivant la revendication 6 ou 7, caractérisé en ce qu'un mélange suivant la revendication 1 est soumis à un traitement thermique à une température dans l'intervalle de 280 à 340°C.

9. Procédé suivant la revendication 8, caractérisé en ce que le traitement thermique est effectué à une température dans l'intervalle de 300 à 320°C.

10. Procédé suivant le revendication 8 ou 9, caractérisé en ce que le traitement thermique est effectué pendant une durée de 5 à 30 minutes.

11. Utilisation d'un matériau polymère expansé suivant la revendication 6 ou 7 pour la préparation de pièces moulées.

12. Utilisation d'un mélange non expansé suivant l'une des revendications 1 à 5 pour la préparation de pièces moulées, qui présentent une résistance plus élevée du joint collé et une viscosité réduite, comparés dans chaque cas à la résistance du joint collé ou, selon le cas, à la viscosité des polymères à cristaux liquides de départ.
